# EUROPEAN PATENT APPLICATION

(11) **EP 3 909 544 A1**
(43) Date of publication of application: **17.11.2021**
(21) Application number: 20173992.7
(22) Date of filing: 11.05.2020
(51) Int. Cl.: A61C 5/90, A61C 1/16

(54) **DENTAL SHIELD**

(71) Applicant: Mc Mahon, Sally-Anne, 44300 Nantes (FR); Cetik, Sibel, 1081 Bruxelles (BE); Mc Mahon, Tara, 1081 Bruxelles (BE)
(72) Inventor: CETIK, Sibel, 1081 Bruxelles (BE); Mc Mahon, Tara, 1081 Bruxelles (BE)
(74) Representative: Fidal Innovation

(57) **Abstract**

The dental shield comprises a sheet (2) of translucent material, and with transverse dimensions comprised between five and forty centimeters, and a holding system (3) assembled to the sheet (2), with a through opening (7) which enables a dental tool (8) to extend through the shield (1) and a retention system (10) to retain the holding system (3) and the dental tool (8) to one another.

## Description

### FIELD OF THE INVENTION

The present invention relates to dental tools.

### TECHNOLOGICAL BACKGROUND

More precisely, the invention relates to tools which are used when performing dental care on patients.

In the field of dental care, it is known to use tools having an effective end, which is introduced into the mouth of patients for performing various operations. Because of saliva or water, dental operations cause various sprays, splashing and spatters outside the mouth of the patient. Patients' upper body (shoulders and chest) are generally protected with dental bibs. Dentists generally protect themselves with gowns, mask, glasses and gloves. Further part of the material used is single-use or is decontaminated from patient to patient. However, spray, splashing or spatter could still reach other surfaces, sometimes more than one meter away or stay in suspension. There is then a risk of contamination for the following patient, as it is unfortunately impossible to use only single-use equipment in a dental practice or to decontaminate efficiently and quickly the air. The projections from the patient's mouth may also contaminate the practitioner and/or the dental nurse, if the very outmost protections (FFP2 masks, goggles, full facial shield, surgical cap and overcoat) are not used.

The invention thus aims at reducing the risks of contamination and spreading of any illness in a dental practice.

### SUMMARY OF THE INVENTION

Thus, the invention relates to a dental shield comprising:
- a sheet of translucent material, the sheet having transverse dimensions comprised between five and forty centimeters, and
- a holding system assembled to the sheet, the holding system comprising a through opening enabling a dental tool to extend through the shield and a retention system designed to retain the holding system and the dental tool to one another....

Thus, the invention makes it possible to protect the surroundings of the mouth of the patient from spatters and splashings, while still enabling the dentist to apply the necessary treatment.

According to various aspects, one or more of the following features may be implemented.

According to some embodiments, the sheet has rounded edges, with no sharp angles

According to some embodiments, the sheet is rigid.

According to some embodiments, the sheet is deformable

According to some embodiments, the holding system is central and the sheet of translucent material is peripheral around the holding system.

According to some embodiments, the holding system comprises an assembly portion for assembly to the sheet, and the sheet is overmolded on the assembly portion.

According to some embodiments, the sheet has a surface-treated first surface and an opposite second surface

According to some embodiments, the retention system is a releasable retention system, and optionally comprising one or more of :
- a magnetic retention system adapted to cooperate with a ferro-metallic retention portion of dental tool for retention,
- an elastomer retention system adapted to be deformed to a compressed configuration elastically retaining the dental tool,
- a mechanical retention system comprising indents shaped to cooperate with external shapes of the dental tool to retain the dental tool.

According to some embodiments, the opening has an adjustable shape.

According to some embodiments, the dental shield comprises an outer device, an inner device, and an attachment system releasably attaching the inner device and the outer device to one another, the outer device comprises the sheet and an outer part of the holding system, and the inner device comprises an inner part of the holding system comprising at least the through opening.

According to another aspect, the invention relates to such an outer device.

According to another aspect, the invention relates to such an inner device.

According to another aspect, the invention relates to a system comprising a dental shield and a dental tool passing through the opening and retained to the holding system of the dental shield.

According to another aspect, the invention relates to a set of dental shields with openings of the shields having various shapes.

According to another aspect, the invention relates to a set of outer devices, with sheets of the outer devices having various shapes, or a set of inner devices, with openings of the inner devices having various shapes.

### BRIEF DESCRIPTION OF THE DRAWINGS

Embodiments of the invention will be described below, in relation to the following drawings :
Fig. 1 is a top view of a dental shield according to a first embodiment.
Fig. 2 is a sectional view along line II-II of Fig. 1 of the embodiment of Fig. 1.
Fig. 3 is a top view similar to Fig. 1 for a second embodiment.
Fig. 4 is a side view of a dental shield according to a third embodiment.
Fig. 5 is a side view of an example of a dental tool.
Fig. 6 is a top view of a dental shield according to a fourth embodiment.
Fig. 7 is a side sectional view of the dental shield of Fig. 6 through the through opening.
Fig. 8 is a view similar to Fig. 7 of the shield according to the embodiment of Fig. 6 and 7 assembled to the dental tool.
Fig. 9 is a view similar to Fig. 8 for a fifth embodiment of a dental shield assembled to another dental tool.
Fig. 10 is an exploded side view of a sixth embodiment of a dental shield.

On the drawings, the same reference signs show the same or similar objects.

### DETAILED DESCRIPTION

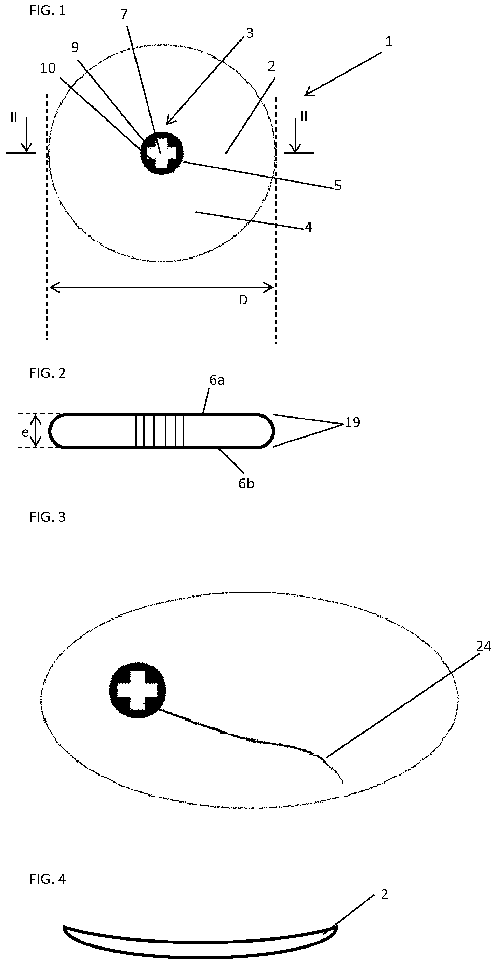

Fig. 1 shows a shield 1 according to one embodiment of the invention. The shield 1 comprises a sheet 2 and a holding system 3 attached to the sheet 2. The sheet 2 has a thickness dimension e which is notably lower than the two other dimensions of the sheet 2. The thickness is for example uniform. The thickness is about 1 millimeter (mm) to 5 millimeters. The other two transverse dimensions of the sheet 2 are of the same order of magnitude. Typically, a transverse dimension D of the sheet is about five centimeters (cm) to fourty centimeters. The sheet may have any suitable two-dimensional shape. For example, the two-dimensional shape is round, such as shown on Fig. 1, ellipse, oval or polygonal, or the like. Round, ellipse, oval or the like shapes show no sharp angles for the two-dimensional shape, which can be advantageous for the safety of the patient and/or the dentist. In addition, the edges 19 of the shield may be rounded.

The sheet 2 has an annular shape with a main body 4 surrounding an opening 5. The opening 5 may be provided centrally, such as shown, or substantially centrally, with respect to the main body 5. However, in variant embodiments, the opening 5 may not be centered with respect to the main body 4, such as shown on Fig. 3.

The sheet 2 is made of a translucent material. Any suitable translucent material might be used, such as translucent glass, translucent sapphire, translucent plastics, such as translucent acrylic. Translucency might be enhanced if the material used is scratch-proof or if the main surfaces of the material are scratch-proof. Further, the material is ambient-light proof, so that translucency is not altered along time. In particular, biodegradable plastic might be used, to enhance recyclability of the sheet 2.

A material will be considered translucent for the invention if it enables sufficient light to pass through for the purpose of the invention which is, for the dentist, to sufficiently see through the sheet into the mouth of the patient. The sheet ought not to impair the ability of the dentist to see inside the mouth of the patient. In particular, it could be transparent.

According to one embodiment, the sheet 2 is rigid. Rigidity is defined as the ability of the sheet to hold a given shape, when no effort is applied to the sheet 2. According to one example, such as shown on Fig. 2, the shape is substantially planar. This is, the two main sheet surfaces 6a, 6b, are substantially planar and parallel to one another. However, according to one example, the sheet 2 might not be planar. For example, it may exhibit some degree of curvature out of a main plane, such as shown on Fig. 4. The concavity could be directed toward the patient. The curvature would typically be moderate, with an instantaneous radius of curvature of the order of the meter or the like. A rigid sheet may be provided in any of the above-listed materials.

According to one example, the sheet 2 is deformable. Deformability is the ability of the shield to take different shapes. In particular, for each shape, the sheet 2 might be rigid. This could be obtained for example by providing a bistable sheet which may take two different rest configurations, when it is possible to elastically deform the sheet from one configuration to the other configuration by applying a mechanical stress on the sheet. A deformable translucent sheet 2 would typically be made of plastic.

The sheet 2 may be symmetric with respect to a central plane passing through the thickness of the sheet 2. In other embodiments, the sheet 2 may be asymmetric. In such case, the sheet 2 would comprise a patient-side and a dentist-side. The patient-side and the dentist-side may have different properties. For example, the sheet may have an asymmetric shape, such as on the example of Fig. 4. Alternately, or in addition, one of the main faces of the sheet 2 may have a specific surface treatment. For example, the patient-side main surface may have a non-stick surface treatment. The roughness of the patient-side main surface might be lower than the roughness of the patient-side main surface. Alternately, or in addition, the patient-side main surface may be more hydrophobic than the dentist-side main surface. These provisions enable aerosols from the mouth of the patient not to stick to the patient-side main surface of the sheet 2, and to flow and/or fall back on the patient.

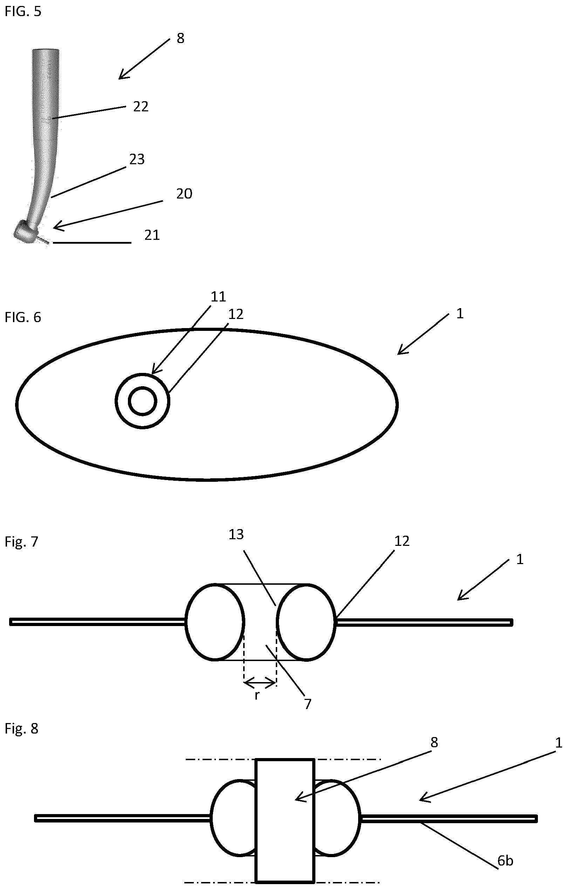

The holding system 3 is attached to the sheet 2. Attachment may be provided according to a plurality of embodiments, such as described below. The holding system 3 is designed to hold a dental tool 8, such as shown for example on Fig. 5. The holding system 3 is provided in the opening 5 of the sheet 2. It is sealingly attached thereto. It comprises a through opening 7 enabling a dental tool 8 to extend through the shield 1. The axis of the through opening 7 is sensibly orthogonal to the average plane of the sheet 2.

The holding system 3 comprises an attachment portion 9 designed for attachment to the sheet 2. Further, the holding system 3 comprises a retention system 10 to retain the dental tool 8 and the shield 1 together. Retention here is meant that moving the dental tool 8 assembled to the shield 1 would move the shield 1 as well.

Fig. 5 shows a typical dental tool 8 suitable for the invention. The dental tool 8 shown on Fig. 5 is a dental turbine. The dental turbine has an elongated shape along a main axis. It comprises an effective end 20 to be inserted into the mouth of the patient. The dental tool 8 comprises a handpiece 22, and a working insert 21 removably attached to the handpiece. As shown here, the working insert may have a longitudinal axis which is substantially angled with respect to the longitudinal angle of the handpiece, for example by 90°, 120° or more. The handpiece 22 may have a handling area 23, which is shaped to be held by the hand of the dentist. The handling area 23 may thus typically have a polygonal cross-section with respect to the longitudinal axis, or flat areas for the reception of fingers. The handling area 23 is close to the working insert 21. The handpiece 22 may also comprise a rear-end area with a different shape, for example with a cylindrical shape with a round cross-section.

According to one example, as shown on Figs. 6 and 7, the shield 1 comprises an annular ring 11 made of an elastomeric material overmolded on the annular sheet 2. The ring 11 might be a torus, as shown, or not. The ring 11 is here described with respect to its central axis. Hence, outer and inner portions are radially outer and inner portions, respectively, with respect to this axis. The outer ring surface 12 of the annular ring 11 forms the attachment portion 2 of the holding system 3 sealingly assembled to the sheet 2. The inner ring surface 13 of the annular ring 11 defines the through opening for letting through the dental tool 8. At rest, the inner radius r of the inner ring surface 13 is lower than the diameter of the dental tool 8. When the dental tool 8 is inserted through the through opening 7, the elastomeric material of the annular ring 11 is deformed, and is elastically pressing on the dental tool 8. This way, the dental tool 8 is retained on the shield 1, such as shown on Fig. 8, where the dental tool is only partially shown. The inner ring surface 13 of the annular ring 11 forms the retention system 10 of the shield 1. Typically, on Fig. 8, the shield 1 is retained on the dental tool 8 at the rear-end portion, or at the rear-end of the handling area 23.

The shield 1 may be a single-use product. In such case, it could be manufactured by a simple manufacturing method, and with cheap components, so as to enable to manufacture a high number of products at lower cost.

Alternately, the shield 1 may be a reusable product. In this case, the shield 1 can be decontaminated after use, for example through sterilization at the dental practice. In such case, material must resist autoclave temperature, typically above 121°C, or even above 134°C.

### The product which has just been described can be used as follows.

In the dental clinic, the patient is sitting in a conventional dental chair.

The dentist assembles the dental tool 8 to the shield 1. This involves inserting the dental tool 8 through the shield 1, in particular through the through opening 7. In the above embodiment, this involves the dental tool 8 deforming the annular ring 11 of elastomeric material. The dental tool 8 is inserted so that its active end projects a few centimeters from the shield 1. The dental tool 8 is retained on the shield 1 in this position by the retention system 10. In particular, the elastomeric ring compresses the dental tool 8.

In particular, the above description applies to the handpiece of the dental tool. Then, the working insert 21 is assembled to the handpiece after the handpiece was fixed on the shield 1. This is especially true if the working insert is sharp and angled, and there would be a risk of deteriorating the shield when passing the working insert through it.

The dentist will hold the dental tool 8 on the patient-side of the shield, by passing his/her hand below the shield 1, and holding the dental tool 8 at the handling area 23 in a usual way. Therefore, the shield is positioned, along the shaft of the dental tool, so that sufficient space is available to the dentist to place his/her hand below the shield 1, between the shield 1 and the face of the patient. If necessary, the relative position of the shield and the dental tool may be adjusted by applying a relative movement of the shield 1 and the dental tool 8 while the elastomeric ring is compressed. The dentist may also position his/her hand on the dentist-side of the shield 1, hoding the dental tool 8 at a distance of the handling area.

The dentist moves the dental tool 8 to the mouth of the patient, and operates as usual. The sheet 2 covers the mouth of the patient at a few centimetres distance. The dentist can see inside the mouth of the patient as usual through the translucent sheet, or almost as usual, if the ring is not provided translucent. Sprays, spatters or splashings from the mouth of the patient will be blocked by the shield, in particular by the sheet, and are not ejected meters away. The splashings will flow on the patient-side surface 6b of the sheet 2, and fall back on the patient (or a bib covering the patient). According to some examples, the sheet 2 may be provided with a groove 24 or furrow on the patient-side, such as shown on the example of Fig. 3. Drops will flow on the patient-side surface 6b into the groove 24, then in the groove 24 to a designed exit. One or more grooves may be provided.

If necessary, the dental tool is moved and, with it, the shield is moved as well. In active position, the distance of the shield 1 to the face of the patient is sufficient so to limit contact with the nose or other parts of the face. If necessary, the sheet 2 can be deformed to another stable configuration. Also, if necessary, a relative movement may be applied to the shield 1 and the dental tool 8. The relative movement may be an axial translation along the shaft of the dental tool 8, or a rotation of the shield 1 about the longitudinal axis of the dental tool 8.

When the dentist is done with the dental tool 8, it is withdrawn from the mouth of the patient, and held stored on a dental unit. It is possible that the dentist will use this dental tool 8 again with this same patient. In such case, the shield 1 remains assembled to the dental tool 8. The dentist may change the working insert if necessary.

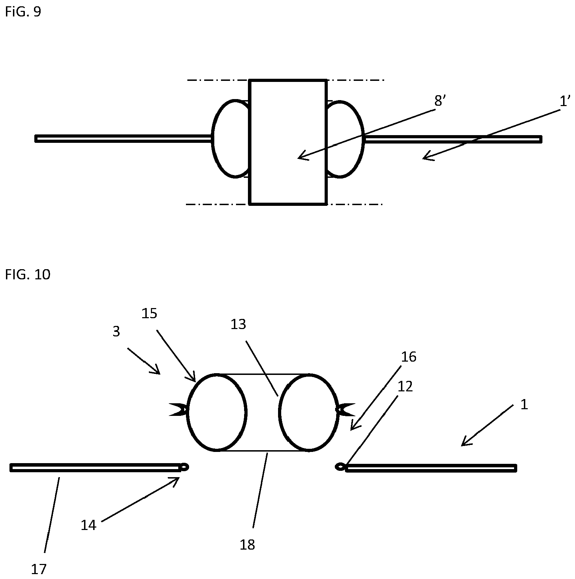

The dentist may need to use another dental tool 8'. The above proceedings may be repeated with the other dental tool 8' and with another shield 1'. The other shield 1' might be identical to the above described shield 1. If the dental tool 8' has a different diameter than the dental tool 8, the same deformable ring may adapt various sizes of dental tools 8, 8'. Hence, the shape of the opening 7 is adjusted to receive various dental tools. Alternatively, the shield 1' may be different from the shield 1, such as shown on Fig. 9. In particular, the retention system of the other shield 1' may be different from that of the first shield, to adapt to a different kind of dental tool. For example, the inner ring diameter might be different.

For example, the other dental tool 8' is a dental scaler or a dental sandblaster, an implant handpiece, a dental air-flow handpiece, a straight dental handpiece, ... The tools could be surgical, implant or any kind of dental handpieces creating a spray. The other dental tool 8' may be an aspiration device.

According to the invention, it is therefore provided a set of shields 1, 1', as described above, which differ in the way they cooperate with the dental tool.

It is possible that the set of shields comprises a limited number of different shields, each shield being suitable for cooperating with a range of dental tools having a range of external diameters. For example, one could provide three different shields, respectively for thin, medium, and large dental tools.

If the dentist wishes to use simultaneously two dental tools, it is possible to assemble each dental tool to a respective shield, and to use the two dental tools at the same time. The sheets 2 of one of the two dental tools might partly cover the other one.

At some point of time, when the dentist considers done with a specific dental tool, or with the patient, the shield 1 is unassembled from the dental tool 8. The working insert might be removed from the handpiece before that.

If the shield 1 is single-use, it can be discarded.

Alternately, the shield 1 is decontaminated using a suitable decontamination process. The shield 1 might be submitted to the same decontamination process as the dental tool 8 and/or the working insert itself.

Fig. 10 now shows an alternative embodiment for the dental tool. According to this embodiment, the holding system 3 is a two-part system. The holding system 3 comprises an outer part 14 and an inner part 15. The outer part 14 and the inner part 15 are releasably attached to one another using an attachment system 16. The outer part 14 comprises the attachment portion 9 designed for attachment to the sheet 2. The inner part 15 comprises the retention system 10 designed for the retention of the dental tool 8. The attachment system 16 may be any system enabling to releasably attach the outer part 14 to the inner part 15. It may for example comprise a mechanical attachment system such as a snap-fitting system, a bayonet mount or the like.

Hence, according to this embodiment, the shield 1 is a two-part product. The shield 1 comprises an outer device 17 and an inner device 18. The outer device 17 comprises the sheet 2 and the outer part 14 of the holding system. The sheet 2 and the outer part 14 of the holding system are sealingly assembled to one another, for example in a definitive way. The outer device 17 is integral. The sheet 2 is for example molded on to the outer part 14.

The inner device 18 of the shield 1 comprises the inner part 15 of the holding system.

For use, the inner device 18 and the outer device 17 are assembled to one another using the attachment system 16 to form the shield 1. The shield 1 is used as discussed above. After use, the inner device 18 is disassembled from the outer device 17 using the attachment system 16.

According to one example, the outer device 17 might be single-use, and discarded after use. The inner device 18 might be decontaminated/sterilized for further uses.

According to this embodiment, different inner devices 18 might be provided, suitable to interact with different dental tools 8 as discussed above. Different inner devices 18 might be assembled to a same outer device 17. Further, different outer devices could be provided, which may be assembled to a same inner device 18. The different outer devices may for example differ by the size or shape of the sheet 2.

Various embodiments are provided for the retention system. These various embodiments are compatible with the description above.

According to one embodiment, the retention system 10 is a mechanical retention system. This system comprises shapes which interact with complementary shapes of the dental tool to hold the dental tool 8 and the shield 1 together. For example, the dental tool 8 is mechanically locked on the shield 1 so as to prevent any relative movement of the dental tool 8 and the shield 1 until unlocking. According to another example, the dental tool 8 is blocked by the shield 1, such that some degrees of freedom of the dental tool 8 are possible with respect to the shield 1. For example, the dental tool 8 may be inserted into the shield 1 by a translation movement along its longitudinal axis until reaching a stoppage position where the dental tool 8 is retained on the shield 1 by abutment. A backward movement of the dental tool by a translation movement along its longitudinal axis opposite the insertion movement remains possible. A rotation of the dental tool 8 with respect to the dental shield around its longitudinal axis is possible too.

According to yet one another embodiment, the retention system 10 is a magnetic retention system if the dental tool 8 comprises ferric components which can be subject to magnetic forces. For example, the retention system 10 comprises one magnet, which cooperates with the dental tool 8 to retain the dental tool 8 on the shield 1. The magnetic retention force might be overcome by hand, which enables to move the dental tool 8 with respect to the shield 1 as needed.

### Refs

Shield 1
Sheet 2
Holding system 3
Main body 4
Opening 5
Surfaces 6a, 6b
Opening 7
Dental tool 8
Attachment portion 9
Retention system 10
Ring 11
Outer ring surface 12
Inner ring surface 13
Outer part 14
Inner part 15
Attachment system 16
Outer device 17
Inner device 18
Edges 19
Effective end 20
Working insert 21
Handpiece 22
Handling area 23

## Claims

1. Dental shield comprising:
- a sheet (2) of translucent material, the sheet having transverse dimensions comprised between five and forty centimeters, and
- a holding system (3) assembled to the sheet (2), the holding system comprising a through opening (7) enabling a dental tool (8) to extend through the shield (1) and a retention system (10) designed to retain the holding system (3) and the dental tool (8) to one another.

2. Dental shield according to claim 1, wherein the sheet (2) has rounded edges, with no sharp angles.

3. Dental shield according to claim 1 or 2, wherein the sheet (2) is rigid.

4. Dental shield according to any of claims 1 to 3, wherein the sheet (2) is deformable.

5. Dental shield according to any of claims 1 to 4, wherein the holding system (3) is central and the sheet (2) of translucent material is peripheral around the holding system (3).

6. Dental shield according to any of claims 1 to 5, wherein the holding system (3) comprises an attachment portion (9) for assembly to the sheet (2), and wherein the sheet (2) is overmolded on the attachment portion (9).

7. Dental shield according to any of claims 1 to 6, wherein the sheet (2) has a surface-treated first surface (6b) and an opposite second surface (6a).

8. Dental shield according to any of claims 1 to 7, wherein the retention system (10) is a releasable retention system, and optionally comprising one or more of :
- a magnetic retention system adapted to cooperate with a ferro-metallic retention portion of dental tool for retention,
- an elastomer retention system adapted to be deformed to a compressed configuration elastically retaining the dental tool,
- a mechanical retention system comprising indents shaped to cooperate with external shapes of the dental tool to retain the dental tool.

9. Dental shield according to any of claims 1 to 8, wherein the opening (7) has an adjustable shape.

10. Dental shield according to any of claims 1 to 9, wherein the dental shield comprises an outer device (17), an inner device (18), and an attachment system (16) releasably attaching the inner device (18) and the outer device (17) to one another, wherein the outer device (17) comprises the sheet (2) and an outer part (14) of the holding system (3), and wherein the inner device (18) comprises an inner part (15) of the holding system (3) comprising at least the through opening (7).

11. An outer device for the dental shield of claim 10.

12. An inner device for the dental shield of claim 10.

13. A system comprising a dental shield (1) according to any of claims 1 to 10, and a dental tool (8) passing through the opening (7) and retained to the holding system (3) of the dental shield.

14. A set of dental shields, each dental shield according to any of claims 1 to 10, with openings (7) of the shields having various shapes.

15. A set of outer devices, each outer device according to claim 11, with sheets of the outer devices having various shapes, or a set of inner devices, each inner device according to claim 12, with openings of the inner devices having various shapes.
